# DEMANDE DE BREVET EUROPEEN

(11) **EP 2 604 409 A1**
(43) Date de publication de la demande: **19.06.2013**
(21) Numéro de dépôt: 12196235.1
(22) Date de dépôt: 10.12.2012
(51) Int. Cl.: B29C 49/42, F16K 11/10, F16K 31/122

(54) **Vanne pour machine de soufflage**

(30) Priorité: 14.12.2011 FR 1161637
(71) Demandeur: Technoplan Engineering S.A., 1228 Plan-Les-Ouates (CH)
(72) Inventeur: Jover, Daniel, 1212 Grand-Lancy (CH); Bohrer, Pierre, 1253 Vandoeuvres (CH)
(74) Mandataire: Bugnion Genève

(57) **Abrégé**

La présente invention concerne une vanne pour machine de soufflage d'emballage, comprenant un corps de vanne (1) creux formant une chambre (2) de forme générale cylindrique avec un axe (17), un couvercle (3), et au moins deux chemises (4,5,6) mobiles le long dudit axe (17) dans ladite chambre (2), au moins une entrée (22,28) et une sortie (30) et des moyens de commande (13,131;14,141 ;15, 151) permettant de déplacer lesdites chemises (4,5,6) dans ladite chambre (2), la position desdites chemises (4,5,6) définissant l'état ouvert ou fermé de ladite au moins une entrée (22,28) et de ladite sortie (30), caractérisée par le fait que lesdites chemises (4,5,6) sont montées l'une dans l'autre et coulissantes de manière étanche l'une dans l'autre et par rapport à la paroi intérieure de la dite chambre (2), qu'elles forment un canal (16) pour le passage d'un gaz de soufflage concentrique audit axe et que chaque chemise (5,6) contenant une autre chemise (4,5) présente au moins un passage radial (18,19,20) pour le passage du gaz de soufflage lorsqu'il est aligné avec la dite entrée (22,28).

## Description

La présente invention concerne une vanne pour machine de soufflage d'emballage, comprenant un corps de vanne creux formant une chambre de forme générale cylindrique avec un axe, un couvercle, et au moins deux chemises mobiles le long dudit axe dans ladite chambre formant un canal pour le passage d'un gaz de soufflage concentrique audit axe, au moins une entrée et une sortie et des moyens de commande permettant de déplacer lesdites chemises dans ladite chambre, la position desdites chemises définissant l'état ouvert ou fermé de ladite au moins une entrée et de ladite sortie.

De nombreux problèmes existent dans le domaine des installations de soufflage d'emballages. Tout d'abord, il est nécessaire de disposer d'un gaz, comme de l'air, à une pression importante de l'ordre de 40 bar pour effectuer le soufflage des emballages dans un moule. Pour comprimer le gaz nécessaire, on se sert de manière classique de compresseurs. Toutefois, selon certains procédés de soufflage, on procède d'abord à un pré-soufflage d'une préforme qui se transformera en emballage puis au soufflage proprement dit. Le pré-soufflage s'effectue à une pression d'environ 10 bar, puis le soufflage atteint une pression de 40 bar. Une première manière d'obtenir ces deux pressions de travail est d'utiliser deux compresseurs, l'un pour générer la pression de 10 bar, et l'autre pour générer la pression de 40 bar. Toutefois, l'utilisation de deux compresseurs est coûteuse à la fois en investissement de départ pour leur achat et en entretien.

Une autre manière de procéder est de n'utiliser qu'un seul compresseur qui comprime le gaz à 40 bar, puis de détendre une partie du gaz comprimé à 10 bar pour l'opération de pré-soufflage. Cette méthode n'est pas non plus très avantageuse puisque l'on gaspille de l'énergie pour comprimer un gaz dont on réduit la pression sans l'avoir utilisé dans le processus de fabrication.

De plus, une fois que l'emballage a été formé par soufflage, le gaz comprimé utilisé (qui est à une pression d'environ 40 bar) est relâché à l'air libre ce qui constitue un gaspillage d'énergie.

Ainsi, il s'est avéré nécessaire de perfectionner les procédés et machines connus pour en améliorer le rendement et réduire ces gaspillages d'énergie.

Des machines et des procédés permettant la fabrication d'emballages, en particulier de bouteilles en PET, par soufflage sont connus dans l'état de la technique. La demande de brevet français 2 662 631, par exemple à laquelle l'on peut se référer, décrit une telle machine et un tel procédé. Selon le procédé décrit on amène une préforme fixée à un distributeur d'air dans un moule, on met le distributeur en liaison avec une source d'air en pression, ledit air s'introduisant dans la préforme de façon à plaquer les parois de la préforme contre les bords du moule, formant ainsi l'emballage désiré. Dans le procédé décrit dans cette demande, on utilise également un vérin d'étirage dont l'action combinée à celle de l'air sous pression permet une autorégulation de l'équilibre entre la déformation axiale et transversale de la préforme ce qui résulte dans un procédé combiné d'étirage et de soufflage.

Dans la machine décrite dans cette demande de brevet, l'air en pression soufflé dans la préforme est également utilisé pour actionner le vérin d'étirage. Une fois l'emballage formé, l'air de soufflage est évacué à l'air libre.

La publication antérieure WO 96/25285 décrit un autre procédé de soufflage d'emballages, comme par exemple des bouteilles à partir d'une préforme. Selon le procédé connu, on procède à un pré-soufflage de la préforme à une pression comprise entre 8 à 12 bar, puis on procède au soufflage proprement dit en injectant de l'air à 40 bar. Dans ce document également, le gaz de soufflage est rejeté à l'air libre une fois que l'emballage a été formé.

Dans toutes ces machines de soufflage, il est nécessaire de disposer d'une ou de plusieurs vannes sur la machine de soufflage pour permettre l'alimentation en gaz à au moins deux pressions différentes (pré-soufflage et soufflage) et son évacuation, voire sa récupération. L'utilisation de nombreuses vannes nécessaires pour la mise en oeuvre des procédés décrits dans l'état de la technique implique des désavantages du point de vue des coûts, de la place et de l'encombrement lié aux conduits, sans parler de l'entretien nécessaire.

Une vanne permettant de pallier certains des inconvénients précités est proposée dans le EP-A-2176053. Plusieurs éléments modulaires superposés ayant un axe commun et formant un canal permettent par le déplacement d'une chemise de bloquer ou autoriser l'entrée ou sortie du gaz de soufflage dans le moule de formage de l'emballage. La structure modulaire de cette vanne permet de l'adapter facilement au nombre souhaité concernant les entrées et sorties du gaz. Néanmoins, le fait que l'on superpose des éléments indépendants a une influence sur l'encombrement de la vanne.

Une vanne correspondant au préambule de la revendication 1 est décrite dans le US 4 467 825. Pour permettre le passage du gaz de soufflage dans le canal la chemise doit se déplacer sur une certaine longueur ce qui rend le dispositif assez long.

Le but de l'invention est d'améliorer les dispositifs connus en diminuant le volume et le coût de la vanne.

Plus particulièrement, un but de l'invention est de proposer une vanne pouvant être utilisée dans les machines de soufflage qui soit compacte et facile à fabriquer tout en étant d'un coût réduit.

La vanne pour machine de soufflage d'emballage, selon l'invention est caractérisée par le fait que lesdites chemises sont montées l'une dans l'autre et coulissantes de manière étanche l'une dans l'autre et par rapport à la paroi intérieure de la dite chambre, et que chaque chemise contenant une autre chemise présente au moins un passage radial pour le passage du gaz de soufflage lorsqu'il est aligné avec la dite entrée.

L'avantage de cette vanne est la structure «en poupées russes» des chemises qui permet de diminuer le volume de la vanne plus particulièrement en hauteur.

Selon une exécution la vanne est **caractérisé en ce qu'**elle comprend trois chemises deux entrées et une sortie, une première chemise permettant d'ouvrir et de fermer une première entrée de la vanne, une deuxième chemise permettant d'ouvrir et de fermer une deuxième entrée de la vanne et une troisième chemise permettant d'ouvrir et de fermer une sortie de la vanne.

Une telle vanne convient pour une installation de soufflage des bouteilles en matière plastique selon un procédé comprenant une étape de pré-soufflage d'une préforme, suivie d'une étape de soufflage, la troisième étape étant l'évacuation du gaz de soufflage dans la bouteille formé vers l'air libre ou une installation de récupération de ce gaz.

Selon une exécution préférée la vanne est **caractérisée en ce que** les moyens de commande permettant de déplacer lesdites chemises dans ladite chambre comprennent une chambre d'actionnement par chemise fermant une entrée de la vanne ou fermant une sortie de la vanne, chaque chambre d'actionnement étant reliée à une alimentation en gaz sous pression qui pourrait être la même source d'alimentation en gaz de soufflage haute pression.

Selon une variante d'exécution la vanne est **caractérisée en ce que** lesdites chambres d'actionnement sont formées pour deux chambres entre des épaulements et la paroi intérieure de ladite chambre, une extrémité tronconique des chemises et les parois extérieures des chemises situées à l'intérieure d'une autre chemise et pour la troisième chambre d'actionnement par le couvercle, une extrémité tronconique de la chemise et la paroi intérieure de ladite chambre.

De préférence lesdites chemises sont munies sur leur surface extérieure de garnitures d'étanchéité annulaires ainsi que la surface intérieure de la chambre.

Selon une exécution lesdites chemises sont totalement ou partiellement en matière plastique.

Selon une autre variante d'exécution lesdites chemises sont en métal de préférence en aluminium.

La vanne selon l'invention sera mieux comprise par la description d'un mode d'exécution de celle-ci et des figures qui s'y rapportent. La vanne est prévue pour une installation de soufflage d'emballage à partir d'une préforme selon trois étapes : pré-soufflage à une pression d'environ 4 à 15 bar, soufflage à une pression d'environ 35 à 50 bar et détente du gaz de soufflage contenu dans l'emballage formé à l'air libre ou récupération dans un circuit ou volume de récupération.
La figure 1 représente un vue en coupe d'une vanne selon l'invention avec trois chemises dans une première position de fermeture des entrées et sortie du gaz.
La figure 2 représente un vue en coupe d'une vanne selon l'invention avec trois chemises dans une deuxième position permettant l'entré du gaz pour le pré-soufflage.
La figure 3 représente un vue en coupe d'une vanne selon l'invention avec trois chemises dans une troisième position permettant l'entrée du gaz pour le soufflage.
La figure 4 représente un vue en coupe d'une vanne selon l'invention avec trois chemises dans une quatrième position permettant la sortie du gaz à la fin du soufflage.

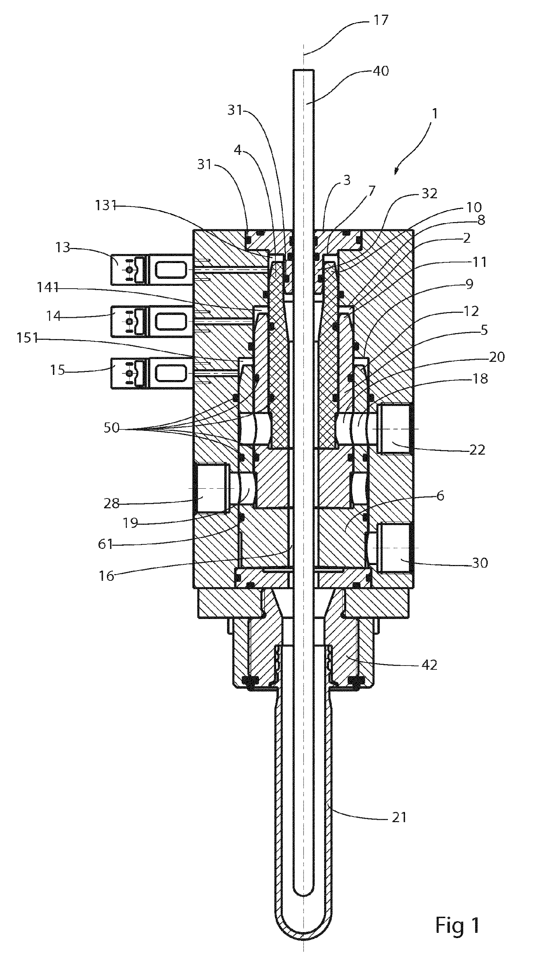

La vanne est décrite en référence à la figure 1 tout d'abord. Cette vanne comprend un corps de vanne 1 avec une chambre 2 de forme générale cylindrique, avec un axe 17 et un couvercle 3. A l'intérieur de la chambre 2, on trouve trois chemises 4, 5 et 6 cylindriques qui sont mobiles le long de l'axe 17. La chemise supérieure 4 se trouve à l'intérieur de la chemise suivante 5 qui à son tour se trouve à l'intérieur de la troisième chemise 6. Les trois chemises 4,5,6 peuvent se déplacer l'une par rapport à l'autre et par rapport à la paroi interne de la chambre 2 de manière étanche grâce à plusieurs garnitures d'étanchéité circulaires 61. La partie creuse de ces trois chemises forme un canal 16 pour le passage du gaz de soufflage. Le couvercle 3 comprend un rétrécissement cylindrique creux 32 venant se loger dans la partie supérieure de la chemise 4. La partie creuse du bouchon 3 contribue à la continuité du canal 16. Des garnitures d'étanchéités circulaires 31 assurent l'étanchéité de l'assemblage du couvercle avec le corps de vanne 2 et la chemise 4. Dans la chambre 2, on trouve deux épaulements circulaires 8 et 9 qui permettant d'adapter le diamètre intérieur de la chambre 2 au diamètre des chemise 4 et 5. D'autre part la paroi intérieure de la chambre 2, le couvercle 3 et les parties supérieures 10,11,12 qui sont tronconiques de trois chemises 4, 5, 6 forment des chambres d'actionnement 131,141,151 pour les trois chemises 4,5,6. Les trois chemises 4,5,6 peuvent être faites partiellement ou totalement d'une matière plastique. Dans certaines applications on utilise de chemises métalliques notamment en aluminium.

Le positionnement des chemises 4, 5 et 6 est déterminé par les chambres d'actionnement 131, 141 et 151 qui sont alimentées en gaz sous pression (par exemple de l'air) par les dispositifs 13, 14 et 15. Ledit gaz sous pression peut venir de la source d'alimentation en gaz pour le soufflage en haute pression c'est-à-dire que les chambres d'actionnement 134, 141, 151 sont reliées à l'orifice 28. Plus précisément, l'introduction de gaz sous pression dans les chambres d'actionnement 131 à 151 permet de déplacer les chemises 4 à 6 axialement, vers le bas comme illustré à la figure 1.

Le corps de vanne est muni de trois ouvertures radiales 22, 28 et 30. L'ouverture 22 assure l'alimentation en gaz de pré-soufflage, l'ouverture 28 assure l'alimentation en gaz de soufflage et l'ouverture 30 l'évacuation du gaz contenu dans l'emballage après sa formation.

LA chemise 6 présente face à l'ouverture 28 un passage radial 19 et face à l'ouverture 22 un passage radial 18. La chemise 5 présente un passage radial 20 face à l'ouverture 22 et dans la continuation du passage 18 de la chemise 6. Ces trois passages radiaux 18, 19 et 20 peuvent traverser les chemises correspondantes sur tout leur diamètre, comme représenté aux figures, ou uniquement le long d'un rayon.

La vanne décrite permet de remplacer dans des installations conventionnelles trois vannes distinctes.

Pour la compréhension du fonctionnement de cette vanne nous avons représenté schématiquement le vérin d'étirage 40 traversant de haut en bas le canal 16, une préforme 21 fixée par un support 42 à la vanne. Le moule dans lequel la préforme se transformera en emballage.

Dans la figure 1, la position des trois chemises montre la vanne en position fermée. Les trois chambres d'actionnement 131, 141, 151 sont sous pression par le gaz venant des dispositifs 13, 14 et 15. Par conséquent, les trois chemises 4, 5, 6 se trouvent en position basse et le gaz venant des orifices 22 ou 28 ne peut pas rentrer dans le canal 16 et l'éventuel gaz contenu dans la préforme 21 ne peut pas s'échapper par l'orifice 30.

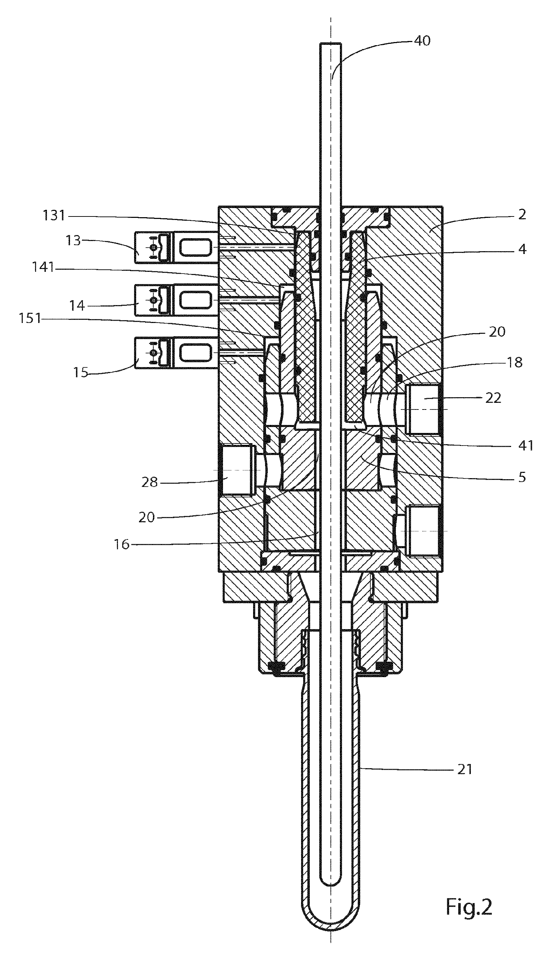

Dans la figure 2 la position des trois chemises montre la vanne en position de pré-soufflage. Le dispositif 13 est commandé pour ne plus envoyer le gaz de commande dans la chambre d'actionnement 131 et de laisser s'échapper le gaz qui s'y trouve à l'air libre ou dans un circuit ou volume de récupération. Le gaz de pré-soufflage qui est à une pression de 4 à 10 bars alimente l'orifice de pré-soufflage 22 passe à travers les canaux 18 et 20. La pression du gaz de pré-soufflage pousse la chemise 4 vers le haut comme représenté à la figure 2. L'espace 41 entre la partie inferieure de la chemise 4 et la surface de la chemise 5 contre laquelle s'appuyait la chemise 4 permet l'entrée du gaz dans le canal 20 et son entrée dans la préforme 21.

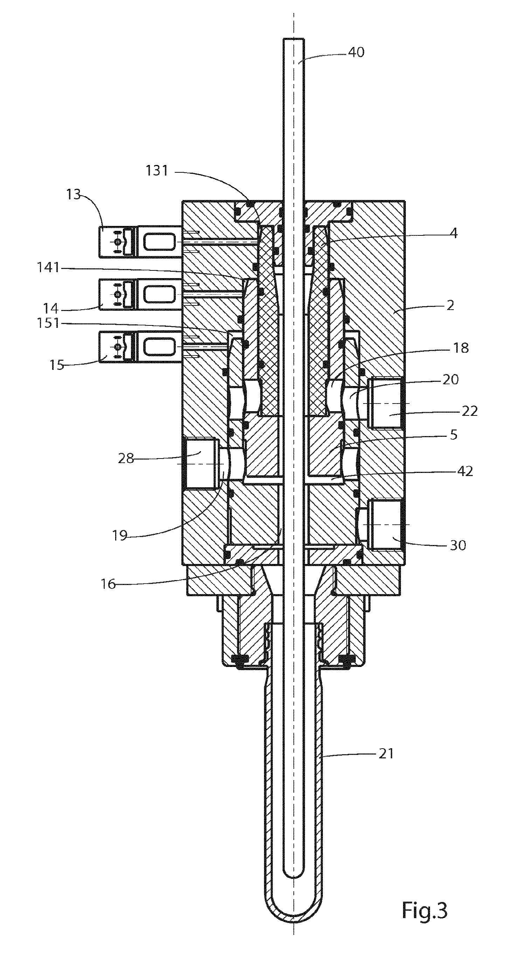

La position des chemises pour le soufflage est représentée à la figure 3. Après la fin de l'étape de pré-soufflage le dispositif 14 est commandé pour ne plus envoyer le gaz de commande dans la chambre d'actionnement 141 et de laisser s'échapper le gaz qui s'y trouve à l'air libre ou dans un circuit ou volume de récupération. Le gaz de soufflage qui est à une pression de 30 à 50 bars alimente l'orifice de soufflage 28 passe à travers le canal 19. La pression du gaz de soufflage pousse la chemise 5 vers le haut, comme représenté à la figure 3, et ferme la communication des canaux 18 et 20 avec le canal 16. L'espace 42 entre la partie inferieure de la chemise 5 et la surface de la chemise contre laquelle s'appuyait la chemise 4 permet l'entrée du gaz dans le canal 20 et son entrée dans la préforme 21 pour le soufflage.

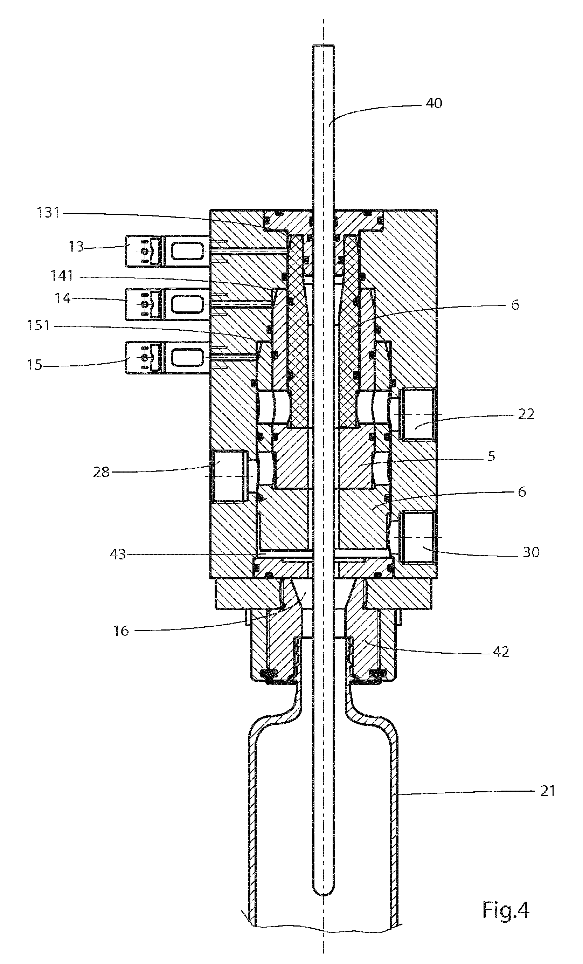

La position des chemises pour l'échappement du gaz de soufflage est représentée dans la figure 4. A la fin du soufflage, le dispositif 15 est commandé pour ne plus envoyer le gaz de commande dans la chambre d'actionnement 151 et de laisser s'échapper le gaz qui s'y trouve à l'air libre ou dans un circuit ou volume de récupération. Le gaz de soufflage dans l'emballage formé 22 qui est à une pression de 30 à 50 bars pousse la chemise 6 vers le haut comme représenté à la figure 4. L'espace 43 entre la partie inferieure de la chemise 6 et la surface de la chambre 2 contre laquelle s'appuyait la chemise 5 permet l'entrée du gaz dans l'orifice 30 pou s'échapper à l'air libre ou un circuit de récupération du gaz. Dans cet état de la vanne, toutes les chemises les chemises 4 à 6sont en position haute, Dans la position d'échappement, les passages 25, 26 et 29 sont quasiment alignés ce qui permet la sortie du gaz de soufflage par le canal d'échappement 30 vers l'extérieur de l'emballage. Pour la simplicité de représentation, la préforme 21 n'a pas changé de forme dans les figures 1 à 3 mais il faut comprendre que lors du pré-soufflage, elle change de forme.

Après l'évacuation du gaz de l'emballage formé, l'emballage 212 est retiré, les trois chambres d'actionnement sont actionnées et le chemises 4 à 6 viennent à la position illustrée à la figure 1. On remet une nouvelle préforme et on recommence. A la fin du pré-soufflage respectivement du soufflage l'alimentation en gaz en gaz est arrêtée.

Dans l'exemple considéré qui a été décrit comme mode d'exécution non-limitatif, trois chemises ont été décrites parce que la vanne devait avoir trois états (alimentation en pré-soufflage, alimentation en soufflage et échappement) mais il est évident que ce nombre peut être varié en fonction des besoins. L'on peut diminuer ce nombre ou l'augmenter en ajoutant des chemises selon le principe de la vanne décrites et en utilisant les moyens décrits ci-dessus pour sa réalisation.

Comme l'on peut aussi comprendre, la présente vanne n'est pas limitée à un usage dans une machine de soufflage mais peut être utilisée dans d'autres applications.

## Revendications

1. Vanne pour machine de soufflage d'emballage, comprenant un corps de vanne (1) creux formant une chambre (2) de forme générale cylindrique avec un axe (17), un couvercle (3), et au moins deux chemises (4,5,6) mobiles le long dudit axe (17) dans ladite chambre (2) formant un canal (16) pour le passage d'un gaz de soufflage concentrique audit axe, au moins une entrée (22,28) et une sortie (30) et des moyens de commande (13,131;14,141 ;15, 151) permettant de déplacer lesdites chemises (4,5,6) dans ladite chambre (2), la position desdites chemises (4,5,6) définissant l'état ouvert ou fermé de ladite au moins une entrée (22,28) et de ladite sortie (30), **caractérisée par le fait que** lesdites chemises (4,5,6) sont montées l'une dans l'autre et coulissantes de manière étanche l'une dans l'autre et par rapport à la paroi intérieure de la dite chambre (2), et que chaque chemise (5,6) contenant une autre chemise (4,5) présente au moins un passage radial (18,19,20) pour le passage du gaz de soufflage lorsqu'il est aligné avec la dite entrée (22,28).

2. Vanne selon la revendication 1, **caractérisé en ce qu'**elle comprend trois chemises (4,5,6), deux entrées (22, 28) et une sortie (30), une première chemise (4) permettant d'ouvrir et de fermer une première entrée (22) de la vanne, une deuxième chemise (5) permettant d'ouvrir et de fermer une deuxième entrée (28) de la vanne et une troisième chemise(6) permettant d'ouvrir et de fermer une sortie (30) de la vanne (1).

3. Vanne selon la revendication 1 ou 2, **caractérisée en ce que** les moyens de commande permettant de déplacer lesdites chemises (4,5,6) dans ladite chambre (2) comprennent une chambre d'actionnement (131,141,151) par chemise (4,5,6) fermant une entrée (22,28) de la vanne (1) ou fermant une sortie (30) de la vanne (1), chaque chambre d'actionnement étant reliée à une alimentation en gaz sous pression.

4. Vanne selon la revendication 3, **caractérisée en ce que** lesdites chambres d'actionnement (131, 141, 151) sont formées pour deux chambres (141,131) entre des épaulements (8,9) et la paroi intérieure de ladite chambre (2), une extrémité tronconique (11,12) des chemises (5,6) et les parois extérieures des chemises (4,5) situées à l'intérieure d'une autre chemise (5, 6) et pour la troisième chambre d'actionnement (141) par le couvercle (3), une extrémité tronconique (7) de la chemise (4) et la paroi intérieure de ladite chambre (2).

5. Vanne selon l'une des revendications 1 à 4, **caractérisé par le fait que** lesdites chemises (4,5,6) sont munies sur leur surface extérieure de garnitures d'étanchéité annulaires (61) ainsi que la surface intérieure de la chambre (2).

6. Vanne selon l'une des revendications 1 à 5, **caractérisée par le fait que** lesdites chemises (4,5,6) sont totalement ou partiellement en matière plastique.

7. Vanne selon l'une des revendications 1 à 5, **caractérisé par le fait que** lesdites chemises (4,5,6) sont en métal de préférence en aluminium.
